# EUROPEAN PATENT APPLICATION

(11) **EP 3 936 286 A1**
(43) Date of publication of application: **12.01.2022**
(21) Application number: 20766977.1
(22) Date of filing: 17.02.2020
(51) Int. Cl.: B25J 13/08

(54) **ROBOT CONTROL DEVICE, ROBOT CONTROL METHOD, AND ROBOT CONTROL PROGRAM**

(30) Priority: 06.03.2019 JP 2019040611
(71) Applicant: OMRON Corporation, Shiokoji-dori, Shimogyo-ku, Kyoto-shi Kyoto 600-8530 (JP)
(72) Inventor: OHNISHI, Yasuhiro, Kyoto 619-0283 (JP); FU, Xingdou, Kyoto 619-0283 (JP)
(74) Representative: Ter Meer Steinmeister & Partner
(86) International application number: PCT/JP2020/005943
(87) International publication number: WO 2020/179416

(57) **Abstract**

A robot control device executes: steps 301 and 304 for capturing, using a hand-eye camera, a first image for use in image processing for determining a first target motion of a robot, and a second image for use in image processing for determining a second target motion following the first target motion; steps 302 and 305 for performing the image processing for determining the first target motion and the second target motion on the basis of the first image and the second image, respectively; and step 303 for controlling the motion of the robot on the basis of the first target motion and the second target motion. Here, in step 305, the image processing for determining the second target motion on the basis of the second image is performed while the robot is in motion on the basis of the first target motion. An image capturing device 82 captures the second image before the motion of a robot 60 on the basis of the first target motion is completed.

## Description

### [Technical Field]

The present disclosure relates to a robot control device, a robot control method, and a robot control program.

### [Background Art]

In the field of factory automation, an operation of picking a workpiece using a robot is controlled by performing image processing for calculating a relative position and a posture of the workpiece with respect to the robot from an image obtained by photographing the work, and calculating a target position and a target posture of the robot for the robot to grip the workpiece based on the calculation results thereof. A camera used in this kind of image capture is called robot vision, and there are various installation methods thereof. For example, as described in Patent Literature 1, a method in which a robot vision is installed in a robot is known. The robot vision installed in the robot is also called a hand-eye camera. According to the hand-eye camera, since a camera viewpoint can be freely moved through a motion of the robot, there is an advantage that a position and a posture of a workpiece located at a position at which recognition thereof is difficult with a fixed camera installed on the robot can be adequately identified.

### [Citation List]

### [Patent Literature]

[Patent Literature 1]

Japanese Laid-Open No. 2011-93014

### [Summary of Invention]

### [Technical Problem]

However, in the method described in Patent Document 1, an operation of the robot is stopped until the image processing for calculating the target position and the target posture of the robot to allow the robot to grip the workpiece from the image obtained by photographing the workpiece is completed, and after the image processing is completed, the operation of picking the workpiece by the robot starts. Therefore, the start of the motion of the robot is delayed by a time required for the image processing, and a time required for the picking operation is prolonged.

Therefore, the present disclosure provides a robot control device, a robot control method, and a robot control program capable of solving such a problem and shortening a time required for a motion of a robot.

### [Solution to Problem]

To solve the above-described problems, according to the present disclosure, there is provides a robot control device including a image capturing device installed in a robot and configured to capture a first image used in image processing for determining a first target motion of the robot, and a second image used in image processing for determining a second target motion following the first target motion of the robot, an image processing device configured to perform the image processing for respectively determining the first target motion and the second target motion based on the first image and the second image, and a controller configured to control a motion of the robot based on the first target motion or the second target motion. The image processing device performs the image processing for determining the second target motion based on the second image when the motion of the robot based on the first target motion is performed. The image capturing device captures the second image before the motion of the robot based on the first target motion is completed. In this way, it is not necessary to delay the start of the motion of the robot by a time required for the image processing, and a time required for the motion of the robot can be shortened by simultaneously performing the motion of the robot based on the first target motion and the image processing for determining the second target motion following the first target motion in parallel.

The first image may be, for example, an image of a first object. The second image may be, for example, an image of a second object different from the first object. The first target motion may be, for example, a target position and a target posture of the robot for the robot to perform an operation on the first object. The second target motion may be, for example, a target position and a target posture of the robot for the robot to operate the second object. Thus, a time required for the robot to operate each of the first object and the second object can be shortened.

According to the present disclosure, a robot control method is provided in which a robot control device performs a step of capturing a first image used in image processing for determining a first target motion of a robot, and a second image used in image processing for determining a second target motion following the first target motion of the robot using a image capturing device installed in the robot, a step of performing the image processing for respectively determining the first target motion and the second target motion based on the first image and the second image, and a step for controlling a motion of the robot based on the first target motion or the second target motion. Here, the step of performing the image processing includes a step of performing the image processing for determining the second target motion based on the second image when the motion of the robot based on the first target motion is performed. The image capturing device captures the second image before the motion of the robot based on the first target motion is completed. In this way, it is not necessary to delay the start of the motion of the robot by a time required for the image processing, and a time required for the motion of the robot can be shortened by simultaneously performing the motion of the robot based on the first target motion and the image processing for determining the second target motion following the first target motion in parallel.

According to the present disclosure, a robot control program is provided which causes a computer system to execute a step of instructing an image capturing device installed in a robot to capture a first image used in image processing for determining a first target motion of the robot, and a second image used in image processing for determining a second target motion following the first target motion of the robot, a step of instructing an image processing device to perform the image processing for respectively determining the first target motion and the second target motion based on the first image and the second image, and a step of instructing a controller to control the motion of the robot based on the first target motion or the second target motion. Here, the step of performing the image processing includes a step of performing the image processing for determining the second target motion based on the second image when the motion of the robot based on the first target motion is performed. The image capturing device captures the second image before the motion of the robot based on the first target motion is completed. In this way, it is not necessary to delay the start of the motion of the robot by a time required for the image processing, and a time required for the motion of the robot can be shortened by simultaneously performing the motion of the robot based on the first target motion and the image processing for determining the second target motion following the first target motion in parallel.

### [Advantageous Effects of Invention]

According to the present disclosure, it is possible to shorten a time required for a motion of a robot.

### [Brief Description of Drawings]

FIG. 1 is an explanatory diagram showing a configuration of a robot control device according to an embodiment.
FIG. 2 is an explanatory diagram showing a motion of a robot according to the embodiment.
FIG. 3 is a flowchart showing an example of a processing flow of a robot control method according to the embodiment.
FIG. 4 is an explanatory diagram showing an example of a hardware configuration of the robot control device according to the embodiment.
FIG. 5 is a flowchart showing an example of the processing flow of the robot control method according to the embodiment.
FIG. 6 is a timing chart showing an example of the processing flow of the robot control method according to the embodiment.

### [Description of Embodiments]

Hereinafter, an embodiment relating to one aspect of the present disclosure will be described with reference to the drawings. The embodiment of the present invention is intended to facilitate the understanding of the present invention, and is not intended to limit the interpretation of the present invention. The present invention can be modified or improved without departing from the spirit thereof, and the present invention also includes an equivalent thereof. The same reference numerals indicate the same components, and duplicate description thereof will be omitted.

### [Application example]

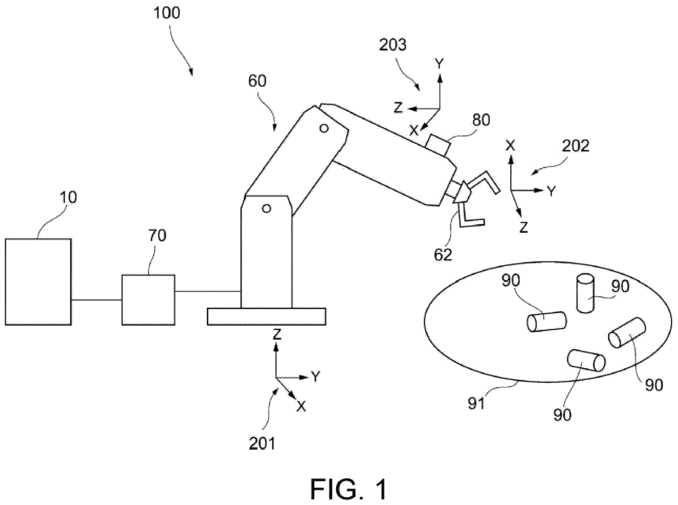

First, an application example of the present invention will be described with reference to FIGS. 1 to 3.

FIG. 1 is an explanatory diagram showing a configuration of a robot control device 100 according to the embodiment. The robot control device 100 includes a computer system 10, a hand-eye camera 80 installed on a wrist of a robot 60, and a controller 70 which controls a motion of the robot 60 as hardware resources thereof. The robot 60 includes a robot hand 62 for operating (for example, grasping, suctioning, moving, assembling, or inserting) an object 90 (for example, a workpiece such as a product or a part in process). The robot control device 100 determines a target motion of the robot 60 through image processing of an image captured by the hand-eye camera 80. The image used in the image processing for determining the target motion of the robot 60 may be, for example, an image of the object 90 operated by the robot 60, or may be an image of a motion environment 91 of the robot 60 (for example, a storage place for the object 90 operated by the robot 60).

The image of the object 90 may be a two-dimensional image or a three-dimensional image. The three-dimensional image means an image having distance information (depth information) between the hand-eye camera 80 and the object 90. The two-dimensional image does not have such depth information. For example, a three-dimensional point group which provides information on a three-dimensional shape of the object 90 in a format called a height map can be mentioned as an example of the three-dimensional image. The hand-eye camera 80 is configured to capture a two-dimensional or three-dimensional image. The hand-eye camera configured to capture a three-dimensional image includes, for example, (i) an image sensor configured to capture a plurality of two-dimensional images while a capturing position of the image sensor for capturing a two-dimensional image is changed and to obtain the three-dimensional image including the depth information by stereoscopic image processing, (ii) a stereo camera configured to obtain a three-dimensional image including the depth information by simultaneously photographing an object in multiple different directions, and (iii) a distance sensor configured to obtain the three-dimensional point group. For example, a trigonometry method, a flight time method (a time-of-flight method), a phase difference method, or the like can be used as a method of the distance sensor.

For example, the robot control device 100 may perform image processing for calculating the relative position and a posture of the object 90 with respect to the robot 60 from an appearance of the image of the object 90 with the hand-eye camera 80 as a viewpoint, and may calculate a target motion of the robot 60 based on the calculation result. The target motion of the robot 60 is, for example, a target position and a target posture of the robot 60 required for the robot 60 to operate an object. For example, an algorithm called model-based matching can be used as this kind of image processing. In an operation in which the robot 60 picks the object 90 and places it in a predetermined position (hereinafter, referred to as "picking and placing"), the target motion of the robot 60 is the target position and the target posture of the robot 60 required for the robot 60 to pick and place the object 90. When a plurality of objects 90 is shown in an image used in the image processing for determining the target motion of the robot 60, the image processing for determining the target motion of the robot 60 may include calculation processing for determining which object 90 is selected from the plurality of objects 90. When the object 90 is picked and placed using the hand-eye camera 80 configured to capture a two-dimensional image of the object 90, it is necessary that the shapes of the objects 90 be known and that the objects 90 be disposed not to overlap each other.

For example, the robot control device 100 may perform image processing for calculating a disposition location of the object 90 from the image of the motion environment 91 of the robot 60, and may calculate the target motion of the robot 60 based on the calculation result. In this example, the target motion of the robot 60 is the target position and the target posture of the robot 60 required for the robot 60 to dispose the object 90 in the arrangement location.

In FIG. 1, a reference numeral 201 indicates a coordinate system based on the robot 60, a reference numeral 202 indicates a coordinate system based on the robot hand 62, and a reference numeral 203 indicates a coordinate system based on the hand-eye camera 80. The relative position and the posture of the object 90 with respect to the hand-eye camera 80 (the position and the posture of the object 90 in the coordinate system 203) can be obtained by calculation from the appearance of the image of the object 90 with the hand-eye camera 80 as the viewpoint. Since a relationship between the coordinate system 203 and the coordinate system 202 is known, the position and the posture of the object 90 in the coordinate system 203 can be converted into the position and the posture of the object 90 in the coordinate system 202 using a transformation matrix. The robot 60 has a built-in encoder which outputs detection information indicating an angle of each of joints, and the position and the posture of the object 90 in the coordinate system 202 can be converted into the position and the posture of the object 90 in the coordinate system 201 based on the angle of each of the joints indicated by the detection information output from the encoder.

A candidate for the target posture (a joint angle of each of the joints) of the robot 60 is determined by inverse kinematics. When there is a plurality of candidates for the target posture of the robot 60, one of candidates may be selected based on an evaluation value of an evaluation function. For example, an evaluation function which outputs an evaluation value that changes according to a length of a movement path of the robot 60 may be used as such an evaluation function.

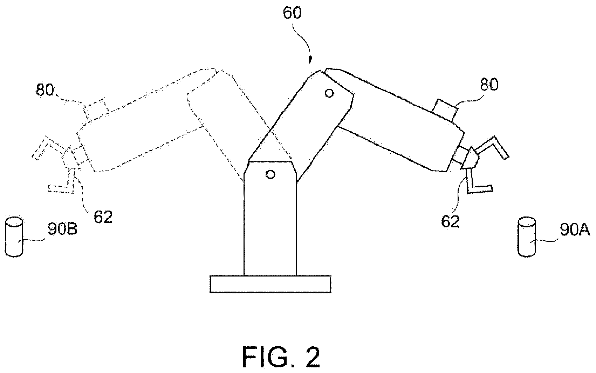

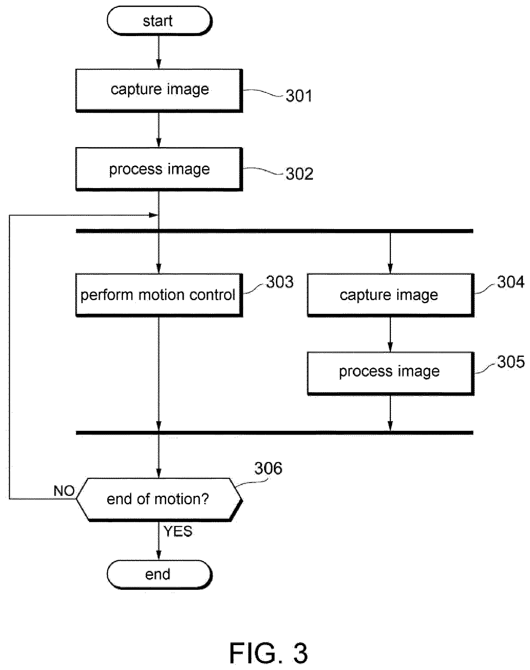

FIG. 2 is an explanatory diagram showing the motion of the robot 60 according to the embodiment. FIG. 3 is a flowchart showing an example of a processing flow of a robot control method according to the embodiment. In this example, a case in which the robot 60 picks and places any one of a plurality of different objects 90 (hereinafter, referred to as a "first object 90A") and then picks and places any one of the objects 90 (hereinafter, referred to as a "second object 90B") will be described. The target position and target posture of the robot 60 required for the robot 60 to pick and place the first object 90A are referred to as a "first target motion". The target position and target posture of the robot 60 required for the robot 60 to pick and place the second object 90B are referred to as a "second target motion". An image of the first object 90A used in image processing for determining the first target motion is referred to as a "first image". An image of the second object 90B used in image processing for determining the second target motion is referred to as a "second image".

In Step 301, the robot control device 100 captures the first image of the first object 90A used in image processing for determining the first target motion of the robot 60.

In Step 302, the robot control device 100 performs the image processing for determining the first target motion. In this step, the robot control device 100 calculates the relative position and the posture of the first object 90A with respect to the robot 60 from an appearance of the first image of the first object 90A through the above-described coordinate transformation, and calculates the first target motion (the first target position and the first target posture) of the robot 60 required for the robot 60 to pick and place the first object 90A.

In Step 303, the robot control device 100 controls the motion of the robot 60 based on the first target motion. In this step, the robot control device 100 outputs a drive command for controlling a rotation angle of a motor which drives each of the joints of the robot 60 to the robot 60 so that the current position and posture of the robot 60 match the first target position and the first target posture.

In Step 304, the robot control device 100 captures the second image used in the image processing for determining the second target motion of the robot 60. In this step, before the motion of the robot 60 based on the first target motion (Step 303) is completed, the robot control device 100 may control the position and the posture of the robot 60 so that the hand-eye camera 80 can photograph the second object 90B, may point the hand-eye camera 80 at the second object 90B, and may capture the second image. For example, the robot control device 100 may capture the second image while the motion of the robot 60 (Step 303) based on the first target motion is being performed. Alternatively, the robot control device 100 may capture the second image before the motion of the robot 60 (Step 303) based on the first target motion is performed.

In Step 305, the robot control device 100 performs the image processing for determining the second target motion. In this step, the robot control device 100 calculates the relative position and the posture of the second object 90B with respect to the robot 60 from an appearance of the second image of the second object 90B through the above-described coordinate transformation, and calculates the second target motion (the second target position and the second target posture) of the robot 60 required for the robot 60 to operate the second object 90B.

In Step 306, the robot control device 100 determines whether or not the operation is completed without performing the motion based on the second target motion. In this step, the robot control device 100 may determine, for example, whether or not it is necessary to continue the motion of the robot 60 based on whether or not a command to continue the motion of the robot 60 has been input from a main program or an operator.

In Step 306, when it is determined that the motion based on the second target motion will be performed (Step 306; NO), in Step 303, the robot control device 100 controls the motion of the robot 60 based on the second target motion. In this step, the robot control device 100 outputs a drive command for controlling the rotation angle of the motor which drives each of the joints of the robot 60 to the robot so that the current position and posture of the robot 60 match the second target position and the second target posture.

According to the embodiment, the robot control device 100 does not need to delay the start of the motion of the robot 60 by a time required for the image processing and can shorten a time required for the motion of the robot 60 by simultaneously performing Step 303 for controlling the motion of the robot 60 based on the first target motion and Step 305 for performing the image processing for determining the second target motion following the first target motion in parallel.

Before the motion of the robot 60 based on the second target motion in Step 303 is completed, the robot control device 100 captures an image used in the image processing for determining a target motion following the second target motion (Step 304). Next, the robot control device 100 simultaneously performs Step 303 for controlling the motion of the robot 60 based on the second target motion and Step 305 for performing the image processing for determining the target motion following the second target motion in parallel. After that, as long as the motion of the robot 60 continues, the robot control device 100 repeats the processes of Steps 303 to 305.

In the above description, although the processing for determining the target motion of the robot 60 through the image processing of the captured image of the object 90 has been described by taking the case in which the robot 60 operates the plurality of different objects 90 as an example, for example, the robot control device 100 may perform the image processing for calculating the arrangement location of the object 90 from the image of the motion environment 91 of the robot 60, and may calculate the target motion of the robot 60 based on the calculation result. Examples of the image processing for calculating the arrangement location of the object 90 include image processing for arranging and disposing the plurality of objects 90, image processing for disposing the object 90 in a predetermined specific location, and the like.

### [Hardware configuration]

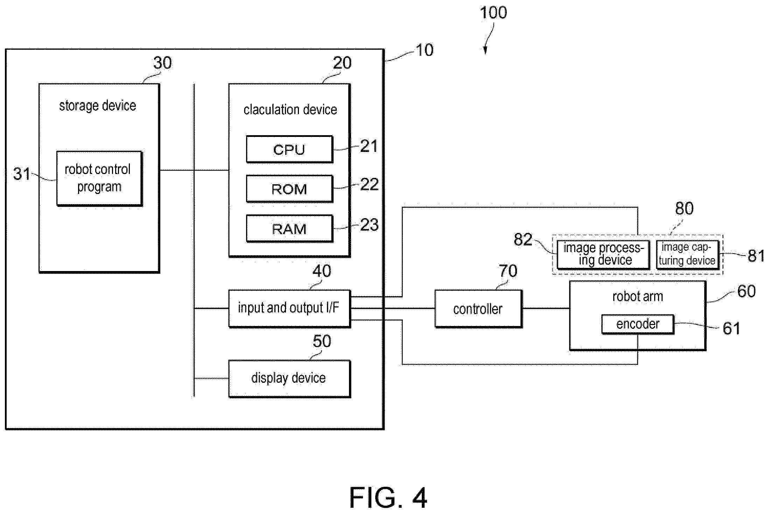

Next, an example of a hardware configuration of the robot control device 100 according to the embodiment will be described with reference to FIG. 4.

The robot control device 100 includes the computer system 10, the hand-eye camera 80 installed on the wrist of the robot 60, and the controller 70 which controls the operation of the robot 60 as hardware resources thereof. The hand-eye camera 80 includes a image capturing device 81 and an image processing device 82. The image capturing device 81 captures an image (for example, the two-dimensional image or the three-dimensional point group) used in the image processing for determining the target motion of the robot 60. The image capturing device 81 may be an image sensor which captures a two-dimensional image, or a distance sensor which captures a three-dimensional point group. The image processing device 82 includes a field programmable gate array (FPGA) designed for image processing. The controller 70 is a robot controller which outputs a signal for driving each of the joints of the robot 60 to the robot 60 in response to an instruction (an instruction indicating the target motion of the robot 60) from the computer system 10.

The robot 60 is, for example, various robots such as a vertical articulated robot, a horizontal articulated robot, a Cartesian robot, or a parallel link robot. The robot 60 is operated as an autonomously operating manipulator, and can be used for various purposes such as picking, assembling, transporting, painting, inspecting, polishing, or cleaning a workpiece. The robot 60 has a built-in encoder 61 which outputs detection information indicating the angle of each of the joints.

The computer system 10 includes a calculation device 20, a storage device 30, an input and output interface 40, and a display device 50. The calculation device 20 includes a central processing unit (CPU) 21, a read only memory (ROM) 22, and a random access memory (RAM) 23. The storage device 30 is a computer-readable recording medium such as a disk medium (for example, a magnetic recording medium or an optical magnetic recording medium) or a semiconductor memory (for example, a volatile memory or a nonvolatile memory). Such a recording medium may also be called, for example, a nontransient recording medium. The storage device 30 stores a robot control program 31 for controlling the motion of the robot 60. The robot control program 31 serves as a main program for controlling the motion of the robot 60, and controls each of parts of the robot control device 100 (the image capturing device 81, the image processing device 82, the controller 70, and the robot 60). The robot control program 31 is read from the storage device 30 into the RAM 23, and interpreted and executed by the CPU 21.

The input and output interface 40 inputs information indicating the target motion of the robot 60, which is information on the result of the image processing by the image processing device 82, from the hand-eye camera 80, and inputs the detection information from the encoder 61, which is information indicating the current position and posture of the robot 60. The CPU 21 generates a motion instruction of the robot 60 (an instruction indicating the target motion of the robot 60) according to the robot control program 31 based on the information output from the hand-eye camera 80 and the encoder 61, and outputs the motion instruction to the controller 70 through the input and output interface 40.

The display device 50 displays, for example, the result of the image processing by the image processing device 82, the result of the operation of the robot 60, and the like. The display device is, for example, a liquid crystal display.

### [Robot control method]

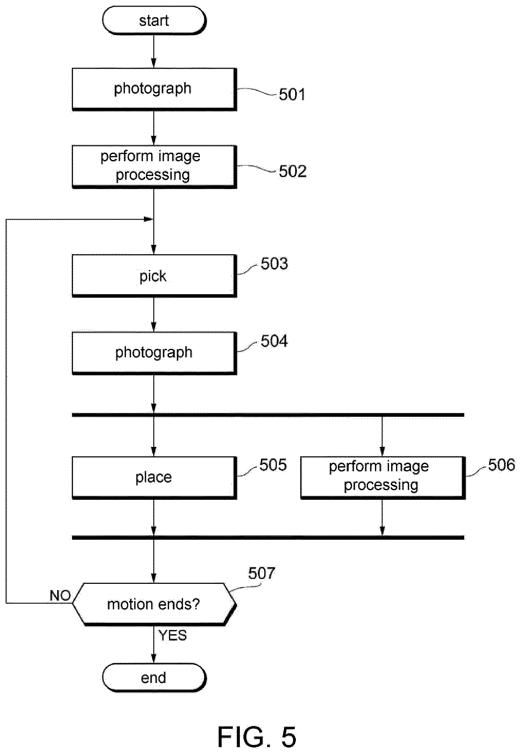

Next, an example of a processing flow for causing the robot 60 to perform a motion of selecting one of the plurality of objects 90 stacked in bulk, picking it, and then placing it in a predetermined position will be described with reference to a flowchart of FIG. 5.

The motion of the robot 60 based on the first target motion is divided into a motion of picking the first object 90A (Step 503) and a motion of placing the picked first object 90A (Step 505). Therefore, the processing of Steps 503 and 505 of FIG. 5 corresponds to the processing of Step 303 of FIG. 5. The processing of Steps 501, 502, 504, 506, and 507 of FIG. 5 corresponds to the processing of Steps 301, 302, 304, 305, and 306 of FIG. 3.

According to this example, the robot control device 100 does not need to delay the start of the motion of the robot 60 by a time required for the image processing, and can shorten a time required for the motion of the robot 60 by simultaneously performing a motion of placing the picked first object 90A (Step 505) and the image processing for determining the target motion of the robot 60 for pick-and-place processing of the second object 90B (Step 506).

Before the motion of placing the picked first object 90A (Step 505) is completed, the robot control device 100 may capture the second image (Step 504). In the flowchart shown in FIG. 5, although the robot control device 100 captures the second image before the motion of placing the picked first object 90A (Step 505), the robot control device 100 may capture the second image at the same time when the picked first object 90A is placed. The robot control device 100 may control the position and the posture of the robot 60 so that the hand-eye camera 80 can photograph the second object 90B before or while the picked first object 90A is placed, may point the hand-eye camera 80 at the second object 90B, and may capture the second image.

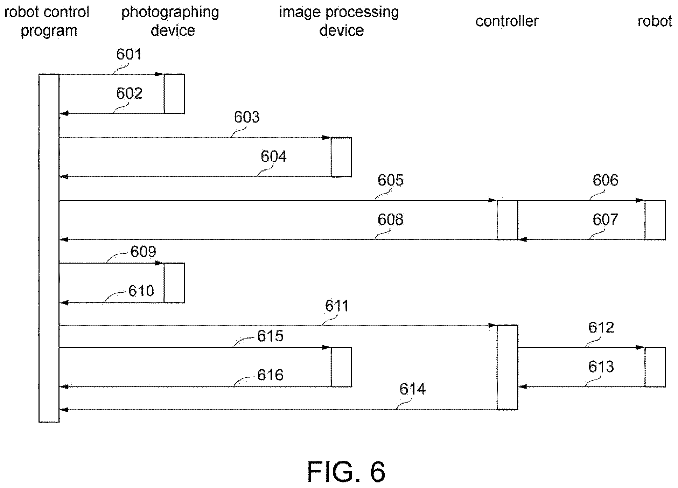

FIG. 6 shows an example of a timing chart of the pick-and-place processing of FIG. 5.

In Step 601 the robot control program 31 instructs the image capturing device 81 to capture the first image used in the image processing for determining the first target motion of the robot 60.

In Step 602, the image capturing device 81 captures the first image.

The processing of Steps 601 and 602 in FIG. 6 corresponds to the processing of Step 501 in FIG. 5.

In Step 603, the robot control program 31 instructs the image processing device 82 to perform the image processing for determining the first target motion based on the first image.

In Step 604, the image processing device 82 performs the image processing for determining the first target motion.

The processing of Steps 603 and 604 of FIG. 6 corresponds to the processing of Step 502 of FIG. 5.

In Step 605, the robot control program 31 instructs the controller 70 to pick the first obj ect.

In Step 606, the controller 70 outputs to the robot 60 a signal which instructs the robot 60 to pick the first object.

In Step 607, the robot 60 picks the first object.

In Step 608, the controller 70 notifies the robot control program 31 of a fact that the picking of the first object is completed.

The processing of Steps 605, 606, 607, and 608 of FIG. 6 corresponds to the processing of step 503 of FIG. 5.

In Step 609, the robot control program 31 instructs the image capturing device 81 to capture the second image used in the image processing for determining the second target motion of the robot 60.

In Step 610, the image capturing device 81 captures the second image.

The processing of Steps 609 and 610 of FIG. 6 corresponds to the processing of Step 504 of FIG. 5.

In Step 611, the robot control program 31 instructs the controller 70 to place the first object 90A.

In Step 612, the controller 70 outputs to the robot 60 a signal which instructs the robot 60 to place the first object 90A.

In Step 613, the robot 60 places the first object 90A.

In Step 614, the controller 70 notifies the robot control program 31 of a fact that the pacing of the first object 90A is completed.

The processing of Steps 611, 612, 613, and 614 of FIG. 6 corresponds to the processing of Step 505 of FIG. 5.

In Step 615, the robot control program 31 instructs the image processing device 82 to perform the image processing for determining the second target motion based on the second image.

In Step 616, the image processing device 82 performs the image processing for determining the second target motion.

The processing of Steps 615 and 616 of FIG. 6 corresponds to the processing of step 506 of FIG. 5.

Even when the motion of the robot 60 is a motion other than the picking and placing (for example, grasping, suctioning, moving, assembling, or inserting), a timing chart of communication between the robot control program 31, the image capturing device 81, the image processing device 82, the controller 70, and the robot 60 is, for example, the same as the timing chart of FIG. 6.

The computer system 10 may include a function of the image processing device 82. Further, whole or some of the functions realized by the robot control program 31 may be realized using dedicated hardware resources (for example, an integrated circuit for a specific application, a field programmable gate array, and the like).

Further, the capturing of the image used in the image processing for determining the target motion of the robot 60 may be performed while the hand-eye camera 80 is stopped or moved. Furthermore, the number of images used in the image processing for determining one target motion of the robot 60 is not limited to one, and may be two or more.

Further, the robot 60 is not limited to an arm of an industrial robot used in factory automation, and may be, for example, an arm of a robot used in a service industry (for example, an operating robot, a medical robot, a cleaning robot, a rescue robot, a security robot, and the like).

Some or all of the above-described embodiments may be described as the following appendices, but are not limited thereto.

### (Appendix 1)

A robot control device 100 includes:
a image capturing device 81 installed in a robot 60 and configured to capture a first image used in image processing for determining a first target motion of the robot 60, and a second image used in image processing for determining a second target motion following the first target motion of the robot 60,
an image processing device 82 configured to perform the image processing for respectively determining the first target motion and the second target motion based on the first image and the second image,
a controller 70 configured to control a motion of the robot 60 based on the target motion or the second target motion, and
the image processing device 82 performs the image processing for determining the second target motion based on the second image when the motion of the robot 60 based on the first target motion is performed, and
the image capturing device 82 captures the second image before the motion of the robot 60 based on the first target motion is completed.

### (Appendix 2)

In the robot control device 100 described in Appendix 1,
the first image is an image of a first object,
the second image is an image of a second object different from the first object,
the first target motion is a target position and a target posture of the robot 60 for the robot 60 to operate the first object, and
the second target motion is a target position and a target posture of the robot 60 for the robot 60 to operate the second object.

### (Appendix 3)

A robot control method in which the robot control device 100 performs:
Steps 101 and 104 of capturing a first image used in image processing for determining a first target motion of a robot 60, and a second image used in image processing for determining a second target motion following the first target motion of the robot 60 using a image capturing device 81 installed in the robot 60,
Steps 102 and 105 of performing the image processing for respectively determining the first target motion and the second target motion based on the first image and the second image, and
Step 103 for controlling a motion of the robot 60 based on the target motion or the second target motion,
Step 105 of performing the image processing includes a step of performing the image processing for determining the second target motion based on the second image when the motion of the robot 60 based on the first target motion is performed, and
the image capturing device 82 captures the second image before the motion of the robot 60 based on the first target motion is completed.

### (Appendix 4)

A robot control program 31 which causes a computer system to execute the following steps,
Steps 401 and 409 of instructing a image capturing device 81 installed in a robot 60 to capture a first image used in image processing for determining a first target motion of the robot 60, and a second image used in image processing for determining a second target motion following the first target motion of the robot 60,
Steps 403 and 415 of instructing an image processing device 82 to perform the image processing for respectively determining the first target motion and the second target motion based on the first image and the second image, and
Steps 405 and 411 of instructing a controller to control the motion of the robot 60 based on the target motion or the second target motion,
Step 416 of performing the image processing includes a step of performing the image processing for determining the second target motion based on the second image when the motion of the robot 60 based on the first target motion is performed, and
the image capturing device 82 captures the second image before the motion of the robot 60 based on the first target motion is completed.

### [Reference Signs List]

- 10: Computer system
- 20: Calculation device
- 21: CPU
- 22: ROM
- 23: RAM
- 30: Storage device
- 31: Robot control program
- 40: Input and output interface
- 50: Display device
- 60: Robot
- 61: Encoder
- 70: Controller
- 80: Hand-eye camera
- 81: Image capturing device
- 82: Image processing device
- 100: Robot control device

## Claims

1. A robot control device comprising:
an image capturing device installed in a robot and configured to capture a first image used in image processing for determining a first target motion of the robot, and a second image used in image processing for determining a second target motion following the first target motion of the robot;
an image processing device configured to perform the image processing for respectively determining the first target motion and the second target motion based on the first image and the second image; and
a controller configured to control a motion of the robot based on the target motion or the second target motion,
wherein the image processing device performs the image processing for determining the second target motion based on the second image when the motion of the robot based on the first target motion is performed, and
the image capturing device captures the second image before the motion of the robot based on the first target motion is completed.

2. The robot control device according to claim 1, wherein:
the first image is an image of a first object,
the second image is an image of a second object different from the first object,
the first target motion is a target position and a target posture of the robot for the robot to operate the first object, and
the second target motion is a target position and a target posture of the robot for the robot to operate the second object.

3. A robot control method in which a robot control device performs:
a step of capturing a first image used in image processing for determining a first target motion of a robot, and a second image used in image processing for determining a second target motion following the first target motion of the robot using an image capturing device installed in the robot;
a step of performing the image processing for respectively determining the first target motion and the second target motion based on the first image and the second image; and
a step for controlling a motion of the robot based on the target motion or the second target motion,
wherein the step of performing the image processing comprises a step of performing the image processing for determining the second target motion based on the second image when the motion of the robot based on the first target motion is performed, and
the image capturing device captures the second image before the motion of the robot based on the first target motion is completed.

4. A robot control program which causes a computer system to execute:
a step of instructing an image capturing device installed in a robot to capture a first image used in image processing for determining a first target motion of the robot, and a second image used in image processing for determining a second target motion following the first target motion of the robot;
a step of instructing an image processing device to perform the image processing for respectively determining the first target motion and the second target motion based on the first image and the second image; and
a step of instructing a controller to control the motion of the robot based on the target motion or the second target motion,
wherein the step of performing the image processing comprises a step of performing the image processing for determining the second target motion based on the second image when the motion of the robot based on the first target motion is performed, and
the image capturing device captures the second image before the motion of the robot based on the first target motion is completed.
